# FASCICULE DE BREVET EUROPEEN

(11) **EP 1 920 192 B1**
(45) Date de publication et mention de la délivrance du brevet: **02.10.2019**
(21) Numéro de dépôt: 06808244.5
(22) Date de dépôt: 17.08.2006
(51) Int. Cl.: F23L 15/00, F23L 7/00, C03B 5/235

(54) **PRECHAUFFAGE DU COMBUSTIBLE ET DU COMBURANT D'OXYBRULEURS A PARTIR D'INSTALLATIONS DE PRECHAUFFAGE D'AIR DE COMBUSTION**
VERFAHREN ZUM VORWÄRMEN VON BRENNSTOFF UND TREIBSTOFF UND BRENNSTOFF FÜR SAUERSTOFF-BRENNER MIT ANLAGEN ZUM VORWÄRMEN VON VERBRENNUNGSLUFT
METHOD OF PRE-HEATING FUEL AND COMBURENT FOR OXY-BURNERS, USING COMBUSTION AIR PRE-HEATING INSTALLATIONS

(30) Priorité: 25.08.2005 FR 0552561
(43) Date de publication de la demande: 14.05.2008
(73) Titulaire: L'AIR LIQUIDE, Société Anonyme pour l'Etude et l'Exploitation des Procédés Georges Claude, 75007 Paris (FR); AGC Glass Europe, 1348 Louvain-la-Neuve (BE)
(72) Inventeur: JARRY, Luc, F-92190 Meudon (FR); LEROUX, Bertrand, F-92130 Issy les Moulineaux (FR)
(74) Mandataire: De Vleeschauwer, Natalie Y.L.D.
(86) Numéro de dépôt international: PCT/FR2006/050803
(87) Numéro de publication internationale: WO 2007/023238

(56) Documents cités:
- EP-A- 0 440 085
- EP-A- 0 567 131
- EP-A- 1 136 451
- EP-A1- 0 808 806
- EP-A2- 0 532 825
- EP-A2- 0 872 690
- US-B1- 6 217 681
- MCMAHON A ET AL: "A partial conversion of a gas-air fired television furnace to oxy-fuel combustion" JOURNAL OF NON-CRYSTALLINE SOLIDS, NORTH-HOLLAND PHYSICS PUBLISHING. AMSTERDAM, NL, vol. 177, novembre 1994 (1994-11), pages 432-435, XP004067898 ISSN: 0022-3093

## Description

La présente invention concerne la mise en place d'un procédé d'oxycombustion avec préchauffage de l'oxygène et/ou du combustible dans un four équipé de moyens pour la mise en oeuvre d'une aérocombustion avec préchauffage d'air.

Les fours à régénérateurs sont des fours équipés d'empilages de réfractaires sur leurs côtés latéraux. Ces réfractaires sont des échangeurs de chaleur permettant de récupérer la chaleur des fumées de combustion sortant des côtés latéraux du four et de transférer cette chaleur à de l'air froid fourni au four. Les réfractaires des régénérateurs sont chauffés à de très hautes températures par les fumées de combustion (de l'ordre de 1300 à 1500°C). En pratique, les fumées de combustion sortant par un côté latéral du four sont mises au contact des réfractaires depuis leur partie supérieure jusqu'à leur partie inférieure pendant un cycle généralement d'environ 20 minutes. Durant le cycle suivant, l'air froid de combustion destiné à alimenter les brûleurs du four est mis au contact des réfractaires depuis leur partie inférieure jusqu'à leur partie supérieure de manière à en extraire leur chaleur. L'air de combustion est alors chauffé à une température généralement de l'ordre de 1100 à 1300°C avant d'être introduit dans la chambre de combustion du four. Les courants de fumée de combustion et d'air de combustion sont inversés à chaque cycle de manière à ce que chaque face de régénérateur puisse être alternativement chauffée et utilisée pour préchauffer l'air de combustion. Le préchauffage de l'air de combustion permet une combustion à l'air avec un rendement énergétique élevé. Pour les fours à récupérateurs, l'air de combustion est chauffé en continu par des échangeurs métalliques alimentés en fumées de combustion.

De nombreux fours fonctionnent maintenant en oxycombustion, ce qui signifie que la combustion n'est plus réalisée entre le combustible et l'air (aérocombustion), mais entre le combustible et un comburant présentant une concentration en oxygène plus élevé que l'air ; il s'agit en général d'air enrichi en oxygène ou d'oxygène pur. Le préchauffage de l'oxygène et du combustible, à partir des fumées des produits de combustion, permet de récupérer une partie de l'énergie qui y est contenue, et d'améliorer l'efficacité énergétique de ce type de combustion. L'énergie contenue dans les fumées des produits de combustion en sortie d'un four de fusion de verre, équipé de flammes oxycombustibles est de l'ordre de 30 % de la puissance consommée.

L'oxycombustion est facilement mise en oeuvre lors de la construction de nouveaux fours. Par contre, il est plus difficile d'utiliser uniquement l'oxycombustion dans des fours à régénérateurs initialement prévus pour la combustion à l'air pour des raisons économiques. Une des raisons est qu'il faut enlever les régénérateurs, modifier le dimensionnement du four et refaire les évacuations des fumées de combustion En effet, en oxycombustion, le volume des fumées de combustion est 4 à 5 fois inférieur à celui d'une combustion à l'air.

EP-A-532825 décrit un four de fusion de verre du type à régénération et à brûleurs transversaux équipé de brûleurs à air associés à des régénérateurs et d'au moins un brûleur auxiliaire à oxygène situé à proximité d'un port d'un régénérateur, ledit brûleur auxiliaire chauffant une zone spécifique du four sans perturbation substantielle de la flamme des brûleurs à air. Quand le four comporte un nombre suffisant de brûleurs auxiliaires à oxygène, le four peut continuer à fonctionner grâce auxdits brûleurs auxiliaires quand les régénérateurs ou les brûleurs à air correspondants sont arrêtés.

Le but de la présente invention est de proposer un procédé de combustion mettant en oeuvre au moins partiellement une oxycombustion dans un four équipé de régénérateurs récupérant la chaleur des fumées de combustion.

Un autre but est de mettre en oeuvre ce procédé d'oxycombustion à partir de l'installation d'un four à aérocombustion déjà existante.

Un autre but est de proposer un procédé d'oxycombustion pouvant s'adapter sur un four à régénérateurs conçu pour une combustion à l'air.

Dans ce but, l'invention concerne un procédé de combustion dans un four équipé de moyens de récupération d'énergie des fumées de combustion et de brûleurs, selon la revendication 1.

L'invention concerne donc la mise en oeuvre d'un procédé de combustion dans un four équipé de moyens de récupération d'énergie, plus particulièrement des régénérateurs conçus de manière à récupérer l'énergie contenue dans les fumées de combustion. La combustion mise en oeuvre dans le four est, au moins partiellement, une oxycombustion, c'est-à-dire la combustion d'un combustible et d'un comburant riche en oxygène. De préférence, au moins 10 % de la puissance de combustion est produite par des brûleurs mettant en oeuvre la combustion d'un combustible et d'un comburant riche en oxygène, encore plus préférentiellement au moins 20 %. Par "riche en oxygène", on entend un comburant présentant une concentration en oxygène supérieure à 90 % en volume. L'oxygène produit par un procédé VSA (adsorption à régénération sous vide) est particulièrement adapté. Selon le procédé de l'invention, les moyens de récupération d'énergie sont utilisés pour chauffer de l'air froid, c'est-à-dire de l'air ambiant, en lui communiquant l'énergie récupérée dans la totalité des fumées de combustion, provenant à la fois de l'oxycombustion et de l'aérocombustion, si des aérobrûleurs sont utilisés (par aérobrûleurs, on entend des brûleurs dont le comburant est de l'air). Dans l'art antérieur, cette énergie récupérée des fumées était uniquement destinée au préchauffage de l'air de combustion, c'est-à-dire l'air mélangé directement au combustible dans le brûleur. Au contraire, dans la présente invention, au moins une partie de l'énergie contenue dans cet air chauffé par les moyens de récupération d'énergie des fumées de combustion est dirigée vers les moyens d'alimentation en combustible et comburant riche en oxygène des oxybrûleurs de manière à préchauffer ce combustible et ce comburant (par oxybrûleurs, on entend des brûleurs dont le comburant est riche en oxygène). Le préchauffage peut être réalisé par tout moyen d'échange de chaleur entre l'air chaud et le combustible ou le comburant.

Il a été noté que l'énergie des fumées issues de l'oxycombustion ne pouvait être récupérée uniquement pour chauffer l'air destiné à la combustion des brûleurs aérocombustible si de tels brûleurs sont présents avec les brûleurs oxycombustibles. En effet, le débit d'air est contrôlé et limité par la puissance et le rapport de combustion air/combustible de l'aérocombustion installée. De même, la température de préchauffage de l'air de combustion est limitée par la tenue des réfractaires ou autres matériaux du système de récupération d'énergie dans les fumées. Ainsi, l'oxycombustion produit un surcroît d'énergie dans les fumées et cette énergie supplémentaire contenue dans les fumées de l'oxy-combustion et évacuée par les moyens de récupération d'énergie du four, peut être récupérée avec le préchauffage d'air dont une partie (ou même la totalité dans le cas d'un four chauffé uniquement par des oxybrûleurs) sera dirigée vers les moyens de préchauffage du combustible et du comburant riche en oxygène des oxybrûleurs.

Lors du chauffage de l'air froid, l'air est porté à une température de préchauffage maximum pour un volume adapté au besoin de l'aérocombustion et du préchauffage de l'oxygène et/ou du combustible de l'oxycombustion. Au moins une partie de l'air chauffé par les moyens de récupération d'énergie est dirigé vers les installations de préchauffage du combustible et/ou du comburant riche en oxygène des brûleurs au moyen d'un échangeur de chaleur direct ou indirect. Par "échangeur de chaleur indirect", on entend un échangeur de chaleur utilisant un gaz inerte pour transférer la chaleur de l'air chaud au combustible et/ou au comburant riche en oxygène : la chaleur de l'air chaud est d'abord transférée au gaz inerte, qui transfère ensuite sa chaleur au combustible et/ou au comburant riche en oxygène. Comme gaz inerte, on peut par exemple utiliser de l'azote, de l'argon.

L'invention peut être mise en oeuvre lorsque tous les brûleurs mettent en oeuvre la combustion d'un combustible et d'un comburant riche en oxygène. Dans ce cas, tout l'air préchauffé par les moyens de récupération d'énergie est destiné à l'échange de chaleur avec le combustible et/ou le comburant riche en oxygène. L'invention convient particulièrement à la combustion mise en oeuvre dans un four de fusion de verre.

L'invention concerne également un procédé de transformation d'un four, selon la revendication 8.

Ce procédé de transformation présente l'avantage de permettre le passage d'un four fonctionnant en aérocombustion à un fonctionnement partiel ou total en oxycombustion tout en conservant les structures du four existant et en utilisant les systèmes de récupération d'énergie dans les fumées pour préchauffer l'oxygène et/ou le combustible de l'oxycombustion de manière à augmenter l'efficacité énergétique de l'installation. Il est donc possible de mettre en oeuvre le procédé d'oxycombustion et de profiter de ses avantages (température de combustion plus élevée et perte d'énergie dans les fumées plus faible, abaissement des NOₓ et des poussières) sans devoir redimensionner profondément le four, notamment en ce qui concerne l'évacuation des fumées, et par conséquent faire un investissement important.

En ne convertissant que partiellement le four à l'oxycombustion et en utilisant les régénérateurs existants pour le préchauffage de l'oxygène et/ou du combustible, on conserve une partie des structures du four et on limite les modifications à apporter au système d'évacuation des fumées.

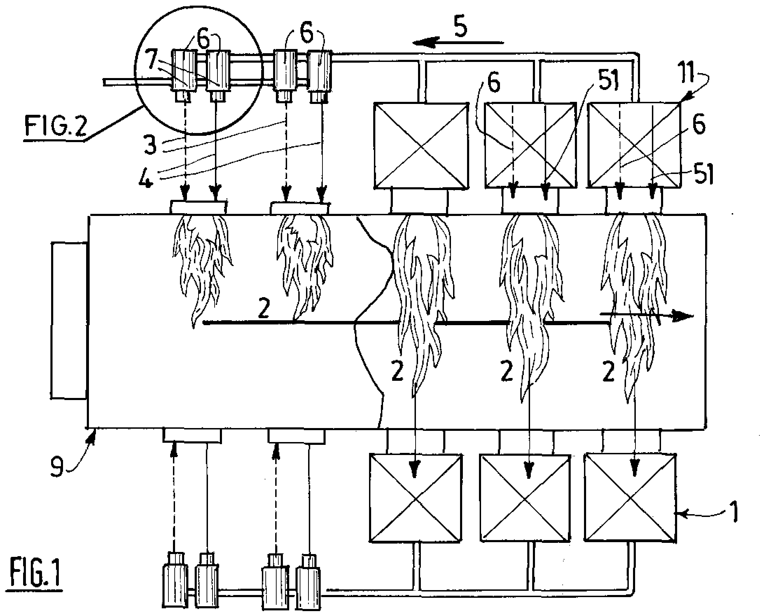

La **figure 1** illustre le procédé de l'invention. Le four 9 est équipé :
   - en amont, d'oxybrûleurs alimentés en combustible 4 et en comburant riche en oxygène 3,
   - en aval, de brûleurs alimentés en combustible 6 et en air chauffé 51,
   - de régénérateurs 1 qui, soit sont alimentés par les fumées chaudes 2 du four (régénérateurs 1), soit qui restituent de l'air chaud 5, 51 (régénérateurs 11). L'air chaud 5 délivré par les régénérateurs 11 est soit utilisé comme air de combustion 51 dans les brûleurs à air, soit utilisé pour préchauffer le combustible 4 et le comburant riche en oxygène 3 des oxybrûleurs au moyen des échangeurs de chaleur 6, 7. Dans cette configuration, l'air chaud 5 issu des régénérateurs 11 placés d'un même côté du four 9 ne permettent respectivement l'alimentation et le préchauffage que des brûleurs aérocombustibles et oxycombustibles placés de leur même côté du four, les brûleurs placés de l'autre côté du four ne fonctionnant pas.

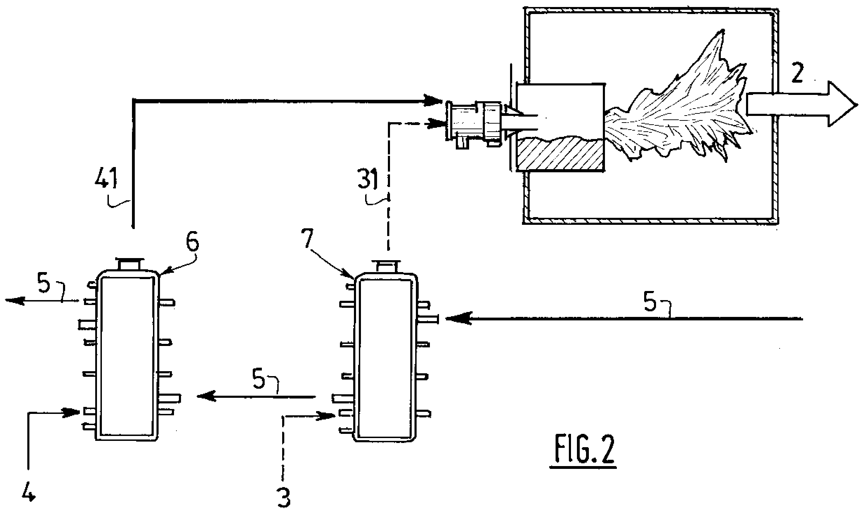

La **figure 2** illustre le préchauffage des réactifs : l'air chaud 5 issu des régénérateurs 11 est introduit successivement dans un échangeur de chaleur 7 de manière à chauffer le comburant riche en oxygène 3, puis dans l'échangeur de chaleur 6 pour chauffer le combustible 4. Le comburant préchauffé 31 et le combustible préchauffé 41 sont ensuite mis en contact pour l'oxycombustion.

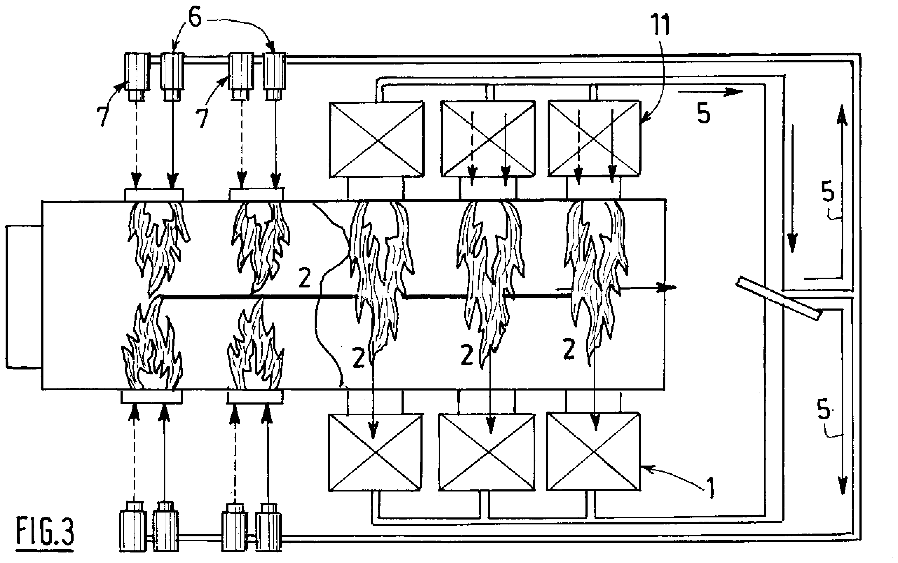

La **figure 3** illustre une variante du procédé de la figure 1 dans lequel les régénérateurs 11 qui sont en train de chauffer de l'air permettent de délivrer de l'air chaud comme air de combustion pour les brûleurs aérocombustibles et de délivrer de l'air chaud pour préchauffer les réactifs des brûleurs oxycombustibles placés de chaque côté du four. Par cette mise en oeuvre, il est donc possible de faire fonctionner en continu les brûleurs oxy-combustibles de chaque côté du four indépendamment des cycles des régénérateurs.

## Revendications

1. Procédé de combustion dans un four équipé de moyens de récupération d'énergie (1 , 11) et de brûleurs, dans lequel la chaleur des fumées de combustion (2) est récupérée par les moyens de récupération d'énergie (1 , 11) et cette chaleur récupérée par les moyens de récupération d'énergie (1, 11) est utilisée pour chauffer de l'air, lesdits moyens de récupération d'énergie étant des régénérateurs,
- au moins une partie des brûleurs mettant en oeuvre la combustion d'un combustible (4) et d'un comburant riche en oxygène (3),
**caractérisé en ce que** :
- au moins une partie de l'air chauffé (5) par les moyens de récupération d'énergie (1, 11) est utilisée pour préchauffer le combustible (4) et/ou le comburant riche en oxygène (3) des brûleurs par échange de chaleur entre l'air chauffé (5) et le combustible (4) et/ou le comburant riche en oxygène (3)

2. Procédé selon la revendication 1 **caractérisé en ce que** le comburant riche en oxygène présente une concentration en oxygène supérieure à 90 % en volume.

3. Procédé selon la revendication 1 ou 2, **caractérisé en ce qu'**au moins 10 % des brûleurs mettent en oeuvre la combustion d'un combustible et d'un comburant riche en oxygène.

4. Procédé selon l'une des revendications 1 à 3, **caractérisé en ce que** l'air chauffé (5) par les moyens de récupération d'énergie (1) préchauffe le combustible (4) et/ou le comburant riche en oxygène (3) des brûleurs au moyen d'un échangeur de chaleur (6, 7).

5. Procédé selon l'une des revendications précédentes, **caractérisé en ce que** tous les brûleurs mettent en oeuvre la combustion d'un combustible et d'un comburant riche en oxygène.

6. Procédé selon l'une des revendications précédentes, **caractérisé en ce que** le four est un four de fusion de verre.

7. Procédé selon l'une des revendications précédentes, **caractérisé en ce que** les brûleurs mettant en oeuvre la combustion d'un combustible et d'un comburant riche en oxygène sont placés de part et d'autre du four et **en ce que** l'air chauffé par les moyens de récupération d'énergie est utilisé pour préchauffer le combustible et/ou le comburant de tous les brûleurs mettant en oeuvre la combustion d'un combustible et d'un comburant riche en oxygène.

8. Procédé de transformation d'un four équipé :
- de brûleurs mettant en oeuvre la combustion d'un combustible et d'air, et
- de moyens de récupération d'énergie dans lesquels la chaleur des fumées de combustion est récupérée pour chauffer l'air, lesdits moyens de récupération d'énergie étant des régénérateurs,
- de moyens d'alimentation des brûleurs en air chauffé,
en un four mettant en oeuvre une oxycombustion, **caractérisé en ce que** :
- l'alimentation en air d'au moins une partie des brûleurs est remplacée par une alimentation en comburant riche en oxygène,
- au moins une partie de l'air chauffé par les moyens de récupération d'énergie est utilisé pour préchauffer le combustible et/ou le comburant riche en oxygène des brûleurs par échange de chaleur entre l'air chauffé (5) et le combustible (4) et/ou le comburant riche en oxygène (3).

## Patentansprüche

1. Verbrennungsverfahren in einem Ofen, der mit Energierückgewinnungsmitteln (1,11) und Brennern ausgestattet ist, wobei die Wärme des Verbrennungsrauchs (2) von den Energierückgewinnungsmitteln (1, 11) zurückgewonnen wird und diese von den Energierückgewinnungsmitteln (1, 11) zurückgewonnene Wärme zum Erwärmen von Luft verwendet wird, wobei es sich bei den Energierückgewinnungsmitteln um Regeneratoren handelt,
- mindestens ein Teil der Brenner die Verbrennung eines Brennstoffs (4) und eines sauerstoffreichen Sauerstoffträgers (3) betreibt,
**dadurch gekennzeichnet, dass**:
- mindestens ein Teil der von den Energierückgewinnungsmitteln (1, 11) erwärmten Luft (5) verwendet wird, um den Brennstoff (4) und/oder den sauerstoffreichen Sauerstoffträger (3) der Brenner durch einen Wärmeaustausch zwischen der erwärmten Luft (5) und dem Brennstoff (4) und/oder dem sauerstoffreichen Sauerstoffträger (3) vorzuwärmen.

2. Verfahren nach Anspruch 1, **dadurch gekennzeichnet, dass** der sauerstoffreiche Sauerstoffträger eine Sauerstoffkonzentration von mehr als 90 Vol.-% aufweist.

3. Verfahren nach Anspruch 1 oder 2, **dadurch gekennzeichnet, dass** mindestens 10 % der Brenner die Verbrennung eines Brennstoffs und eines sauerstoffreichen Sauerstoffträgers betreiben.

4. Verfahren nach einem der Ansprüche 1 bis 3, **dadurch gekennzeichnet, dass** die von den Energierückgewinnungsmitteln (1) erwärmte Luft (5) mittels eines Wärmeaustauschers (6, 7) den Brennstoff (4) und/oder den sauerstoffreichen Sauerstoffträger (3) der Brenner vorwärmt.

5. Verfahren nach einem der vorstehenden Ansprüche, **dadurch gekennzeichnet, dass** alle Brenner die Verbrennung eines Brennstoffs und eines sauerstoffreichen Sauerstoffträgers betreiben.

6. Verfahren nach einem der vorstehenden Ansprüche, **dadurch gekennzeichnet, dass** es sich beim Ofen um einen Glasschmelzofen handelt.

7. Verfahren nach einem der vorstehenden Ansprüche, **dadurch gekennzeichnet, dass** die Brenner, die die Verbrennung eines Brennstoffs und eines sauerstoffreichen Sauerstoffträgers betreiben, sich auf beiden Seiten des Ofens befinden und dass die von den Energierückgewinnungsmitteln erwärmte Luft verwendet wird, um den Brennstoff und/oder den sauerstoffreichen Sauerstoffträger aller Brenner vorzuwärmen, die die Verbrennung eines Brennstoffs und eines sauerstoffreichen Sauerstoffträgers betreiben.

8. Verfahren zur Umrüstung eines Ofens, der ausgestattet ist mit:
- Brennern, die die Verbrennung eines Brennstoffs und von Luft betreiben, und
- Energierückgewinnungsmitteln, in denen die Wärme des Verbrennungsrauchs zurückgewonnen wird, um die Luft zu erwärmen, wobei es sich bei den Energierückgewinnungsmitteln um Regeneratoren handelt,
- Mitteln zur Versorgung der Brenner mit erwärmter Luft,
in einem Ofen, der eine Oxy-Verbrennung betreibt, **dadurch gekennzeichnet, dass**:
- die Versorgung mindestens eines Teils der Brenner mit Luft durch eine Versorgung mit einem sauerstoffreichen Sauerstoffträger ersetzt ist,
- mindestens ein Teil der von den Energierückgewinnungsmitteln erwärmten Luft verwendet wird, um den Brennstoff und/oder den sauerstoffreichen Sauerstoffträger der Brenner durch einen Wärmeaustausch zwischen der erwärmten Luft (5) und dem Brennstoff (4) und/oder dem sauerstoffreichen Sauerstoffträger (3) vorzuwärmen.

## Claims

1. Method of combustion in a furnace that is equipped with energy recovery means (1, 11) and burners, wherein the heat from the combustion fumes (2) is recovered by the energy recovery means (1, 11) and this heat recovered by the energy recovery means (1, 11) is used to heat the air, said energy recovery means being regenerators,
- at least some of the burners implementing the combustion of a fuel (4) and of an oxygen-rich oxidizer (3),
**characterised in that**:
- at least some of the air heated (5) by the energy recovery means (1, 11) is used to preheat the fuel (4) and/or the oxygen-rich oxidizer (3) of the burners by heat exchange between the heated air (5) and the fuel (4) and/or the oxygen-rich oxidizer (3).

2. Method according to claim 1, **characterised in that** the oxygen-rich oxidizer has a concentration in oxygen greater than 90% by volume.

3. Method according to claim 1 or 2, **characterised in that** at least 10% of the burners implement the combustion of a fuel and of an oxygen-rich oxidizer.

4. Method according to one of claims 1 to 3, **characterised in that** the air heated (5) by the energy recovery means (1) preheats the fuel (4) and/or the oxygen-rich oxidizer (3) of the burners by means of a heat exchanger (6, 7).

5. Method according to one of the preceding claims, **characterised in that** all of the burners implement the combustion of a fuel and of an oxygen-rich oxidizer.

6. Method according to one of the preceding claims, **characterised in that** the furnace is a glass melting furnace.

7. Method according to one of the preceding claims, **characterised in that** the burners that implement the combustion of a fuel and of an oxygen-rich oxidizer are placed on either side of the furnace and **in that** the air heated by the energy recovery means is used to preheat the fuel and/or the oxidizer of all of the burners that implement the combustion of a fuel and of an oxygen-rich oxidizer.

8. Method for transforming a furnace provided with:
- burners that implement the combustion of a fuel and of air, and
- energy recovery means wherein the heat from the combustion fumes is recovered to heat the air, said energy recovery means being regenerators,
- means for supplying burners with heated air,
into a furnace that implements an oxycombustion, **characterised in that**:
- the air supply of at least some of the burners is replaced with a supply with oxygen-rich oxidizer,
- at least some of the air heated by the energy recovery means is used to preheat the fuel and/or the oxygen-rich oxidizer of the burners via heat exchange between the heated air (5) and the fuel (4) and/or the oxygen-rich oxidizer (3).
